# EUROPÄISCHE PATENTANMELDUNG

(11) **EP 1 089 531 A2**
(43) Veröffentlichungstag der Anmeldung: **04.04.2001**
(21) Anmeldenummer: 00119937.1
(22) Anmeldetag: 13.09.2000
(51) Int. Cl.: H04M 3/42, H04M 7/00

(54) **Verfahren zum Konfigurieren einer an einem Kommunikationssystem anzumeldenden Applikation**

(30) Priorität: 28.09.1999 DE 19946505
(71) Anmelder: SIEMENS AKTIENGESELLSCHAFT, 80333 München (DE)
(72) Erfinder: Zimmermann, Werner, Dr., 58708 Menden (DE)

(57) **Zusammenfassung**

Die Applikation (T-AP) weist für eine Steuerung von Systemfunktionen (LM1, LM2,...) des Kommunikationssystems (PBX) mehrere, jeweils einer Systemfunktion (LM1, LM2,...) zugeordnete Auswahleinheiten - insbesondere an einer optischen Bedienoberfläche angezeigte Schaltflächen - auf. Zusätzlich ist zwischen der Applikation (T-AP) und dem Kommunikationssystem (PBX) eine Referenzliste (RL) mit den, bei Empfang einer systemfunktions-spezifischen Zeichenfolge (ZF) durch das Kommunikationssystem (PBX) ausführbaren Systemfunktionen (LM1, LM2,...) fest vereinbart. Im Rahmen der Anmeldung wird nun automatisch die den in der Referenzliste (RL) aufgeführten Systemfunktionen (LM1, LM2,...) zugeordneten systemfunktionsspezifischen Zeichenfolgen (ZF) vom Kommunikationssystem (PBX) an die Applikation (T-AP) übermittelt durch die Applikation (T-AP) den Auswahleinheiten zugehörig gespeichert.

## Beschreibung

Aus der Produktschrift 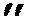 Sonderausgabe telcom report und Siemens Magazin Com: ISDN im Büro - HICOM", Siemens AG, Berlin und München, 1985, insbesondere der Seiten 58 bis 75, ist ein für eine zeitschlitz-basierte Informationsvermittlung, insbesondere Sprachdatenvermittlung ausgebildetes Kommunikationssystem HICOM bekannt. Ein Anschluß von Kommunikationsendgeräten, beispielsweise von Telefonen, an das Kommunikationssystem erfolgt dabei über eine Mehrzahl von Teilnehmeranschlußports bereitstellende Teilnehmeranschlußeinheiten. Ein Anschluß an ein Kommunikationsnetz, beispielsweise ein ISDN-Kommunikationsnetz, erfolgt über eine in dem Kommunikationssystem angeordnete, einen Netzanschlußport bereitstellende Netzanschlußeinheit. Durch eine im Kommunikationssystem angeordnete zentrale Steuereinheit erfolgt eine Steuerung der Informationsvermittlung. Hierzu werden über die Anschlußports empfangene, gemäß standardisierter oder kommunikationssystemspezifischer Protokolle ausgestaltete Steuerinformationen an die zentrale Steuereinheit des Kommunikationssystems weitergeleitet und von dieser in entsprechende Steuerinformationen für das Kommunikationssystem umgesetzt.

Im Zuge der Verschmelzung von Sprachverarbeitung und Datenverarbeitung sind häufig Datenverarbeitungseinrichtungen, wie beispielsweise 'Personal Computer' oder 'Workstations', an das Kommunikationssystem angeschlossen. Ein Anschluß der Datenverarbeitungseinrichtungen an das Kommunikationssystem kann dabei über ein Kommunikationsnetz - beispielsweise ein digitales ISDN-Kommunikationsnetz -, über einen Teilnehmeranschlußport oder über ein mit dem Kommunikationssystem verbundenes lokales Netzwerk LAN (Local Area Network) erfolgen. Für eine Steuerung einer Datenübermittlung über das Kommunikationssystem laufen auf den Datenverarbeitungseinrichtungen jeweils eine bidirektionale Verbindung mit dem Kommunikationssystem initiierende Applikationen ab. Für ein Einrichten der Verbindung, d.h. für eine Bekanntmachen der Applikation am Kommunikationssystem ist ein Anmelden der Applikation gemäß bekannter Anmeldeprozeduren - in der Literatur häufig als Login bezeichnet - am Kommunikationssystem notwendig. Im Zuge der Anmeldung wird eine der Applikation zugeordnete Rufnummer und ein dem Benutzer der Applikation zugeordnetes Paßwort an die den Anschluß der Datenverarbeitungseinrichtung an das Kommunikationssystem realisierende Anschlußeinheit übermittelt. Stimmen die übermittelte Rufnummer und das Paßwort mit der in der Anschlußeinheit bzw. zentralen Steuereinheit des Kommunikationssystems hinterlegten Rufnummer und dem dieser Rufnummer zugeordnet gespeicherten Paßwort überein, wird die Applikation in dem Kommunikationssystem als angemeldet verzeichnet. Durch die Zuordnung einer jeweiligen Rufnummer zu einer Applikation wird eine angemeldete Applikation durch die zentrale Steuereinheit des Kommunikationssystems wie ein normaler aktivierter Anschlußport behandelt.

Ist die Applikation dagegen physikalisch eindeutig einem Anschlußport des Kommunikationssystems zugeordnet, beispielsweise durch eine Verbindung mit einer speziellen Systemschnittstelle des Kommunikationssystems oder durch die Verbindung mit einem Endgerät - als intelligente Eingabehilfe - wobei die Applikation dem Anschlußport des Kommunikationsendgerätes zugeordnet ist, wird in der Regel keine Anmeldeprozedur benötigt. In diesen Fällen wird von der Applikation üblicherweise eine applikationsspezifische Aktivmeldung an das Kommunikationssystem übermittelt.

Durch die Applikation wird einem Benutzer auf dem Bildschirm der Datenverarbeitungseinrichtung in der Regel eine graphische Bedienoberfläche zur Verfügung gestellt, die für eine Steuerung von Systemfunktionen, insbesondere von durch das Kommunikationssystem bereitgestellten Leistungsmerkmalen aktivierbare, den jeweiligen Systemfunktionen des Kommunikationssystems zugeordnete Schaltfläche aufweist. Diesen Schaltflächen sind dabei entweder virtuelle Tasten oder alternativ an einem Tastenblock eingebbare Zeichenfolgen - bestehend aus den Zeichen "*", "#" und den Ziffern 0 - 9 - zugeordnet. Bei einer Zuordnung von virtuellen Tasten zu den Schaltflächen einer Applikation wird bei einer Betätigung der Schaltfläche eine die virtuelle Taste identifizierende Information an das Kommunikationssystem übermittelt. Für eine Auswertung entsprechender an einer Applikation vorgenommener Tastenanreize ist es somit notwendig, daß das Kommunikationssystem sowohl Kenntnis von dem Vorhandensein der entsprechenden Applikation als auch über die Belegung der virtuellen Tasten der jeweiligen Applikation hat.

Dagegen ist bei einer Zuordnung von Zeichenfolgen zu den Schaltflächen einer Applikation zur Interpretation der einer Schaltfläche hinterlegten Systemfunktion keine Kenntnis von dem Vorhandensein der Applikation notwendig. Bei einer Betätigung der Schaltfläche wird die entsprechende Zeichenfolge an das Kommunikationssystem übermittelt, in der die empfangene Zeichenfolge durch eine Wahlbewertungsroutine in eine die entsprechende Systemfunktion aktivierende Steuerinformation umgesetzt wird. Hierzu benötigt die Applikation lediglich Kenntnis von den, den Systemfunktionen im Kommunikationssystem zugeordneten systemfunktions-spezifischen Zeichenfolgen. Die Zuordnung von systemfunktions-spezifischen Zeichenfolgen zu den Schaltflächen einer Applikation weist gegenüber der Zuordnung von virtuellen Tasten den Vorteil auf, daß das Kommunikationssystem keine Kenntnis über das Vorhandensein der Applikation benötigt, da die Eingaben wie von einem herkömmlichen Telefon erscheinen und daß im Kommunikationssystem kein zusätzlicher Speicherplatz für die Speicherung der virtuellen Tastenbelegungen benötigt wird.

Die Zuordnung von systemfunktions-spezifischen Zeichenfolgen zu den Schaltflächen einer Applikation findet insbesondere bei einem Anschluß von systemfremden Applikationen, d.h. von Applikationen, die an das Kommunikationssystem nicht speziell angepaßt sind, Verwendung. Hierbei erfolgt eine Umsetzung des von der Applikation unterstützten Übertragungsprotokolls - üblicherweise des TAPI-Protokolls (Telefony Application Programming Interface) - auf ein kommunikationssystem-spezifische Übertragungsprotokoll durch eine spezielle, auf der Datenverarbeitungseinrichtung ablaufende Treibereinheit. Hierbei müssen die den Systemfunktionen zugeordneten Zeichenfolgen in der Treibereinheit entweder fest gespeichert, oder falls die systemfunktions-spezifischen Zeichenfolgen systemseitig konfigurierbar sind auch treiberseitig konfigurierbar gespeichert sein.

Eine Umkonfigurierung der den Systemfunktionen zugeordneten Zeichenfolgen im Kommunikationssystem erfordert eine entsprechende, in der Regel manuell vorzunehmende Anpassung der systemfunktions-spezifischen Zeichenfolgen sowohl in allen systemspezifischen, d.h.speziell für einen Anschluß an das Kommunikationssystem ausgestaltete Applikationen als auch in allen Treibereinheiten für die systemfremden Applikationen. Dies ist mit einem erheblichen Aufwand verbunden. Des weiteren ist eine korrekte Konfigurierung für Systemfunktionen, deren Aktivierung eine besondere oder auch temporäre Berechtigung benötigen, nicht möglich.

Der vorliegenden Erfindung liegt die Aufgabe zugrunde, ein Verfahren anzugeben, durch welches eine variable Konfigurierung einer an einem Kommunikationssystem anzumeldenden Applikation auf einfache Weise ermöglicht wird.

Die Lösung dieser Aufgabe erfolgt erfindungsgemäß mit den Merkmalen des Patentanspruchs 1.

Hierbei ist zwischen dem Kommunikationssystem und den, dem Kommunikationssystem zugeordneten Applikation eine Referenzliste vereinbart, die den gesamten Umfang des Systemfunktionsangebots - insbesondere der vom Kommunikationssystem realisierten Leistungsmerkmale - angibt. Im Rahmen der Anmeldung einer dieser Applikationen am Kommunikationssystem werden in einem sogenannten "Downloadverfahren" die im Kommunikationssystem konfigurierten systemfunktions-spezifischen Zeichenfolgen - in der Literatur häufig auch als Codeworte bezeichnet - in der Reihenfolge der Referenzliste an die Applikation übermittelt und durch diese gespeichert.

Ein wesentlicher Vorteil des erfindungsgemäßen Verfahrens besteht somit darin, daß auf einfache Weise eine aktuelle und einheitliche Konfigurierung aller einem Kommunikationssystem zugeordneten Applikationen ohne eine manuelle Überprüfung, ob eine Änderung der im Kommunikationssystem vorliegenden Konfigurierung vorgenommen wurde, erreicht wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß in Fällen, in denen Systemfunktionen aufgrund fehlender Berechtigungen für eine Applikation gesperrt sind, eine Übermittlung der den Systemfunktionen zugehörigen Zeichenfolgen einfach durch das Kommunikationssystem unterbunden wird, so daß auf einfache Weise eine variable, benutzerindividuelle Konfigurierung einer Applikation auch bei speziellen Berechtigungen möglich ist.

Ein weiterer Vorteil von in den Unteransprüchen definierten Ausgestaltungen der Erfindung besteht darin, daß durch die Konfigurierung einer, einer systemfremden Applikation zugeordneten Treibereinheit, welche das von der Applikation unterstützte Protokoll auf das kommunikationssystem-spezifische Protokoll umsetzt, auch systemfremde Applikationen, d.h. Applikationen, die nicht speziell für einen Anschluß an das Kommunikationssystem ausgestaltet sind, an dem Kommunikationssystem angemeldet werden können.

Ein Ausführungsbeispiel der Erfindung wird im folgenden anhand der Zeichnung näher erläutert.

Dabei zeigen:
- Fig. 1:: ein Strukturbild zur schematischen Darstellung einer Kommunikationsanlage und von mit der Kommunikationsanlage verbundenen Datenverarbeitungseinrichtungen;
- Fig. 2:: ein Ablaufdiagramm zur Veranschaulichung der beim erfindungsgemäßen Verfahren ablaufenden wesentlichen Verfahrensschritte.

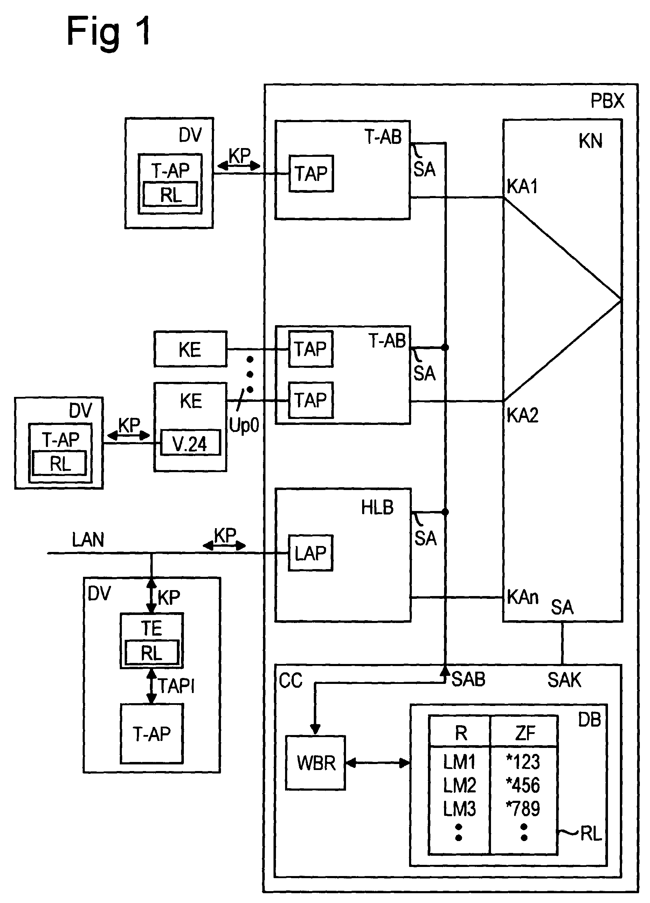

Fig. 1 zeigt eine schematische Darstellung einer Kommunikationsanlage PBX mit einer in dieser angeordneten, als LAN-Anschlußeinheit HLB ausgestalteten Baugruppe. Die Kommunikationsanlage PBX weist weitere Teilnehmer- bzw. Netzanschlußeinheiten - beispielhaft sind zwei Teilnehmer-Anschlußeinheiten T-AB dargestellt - zum Anschluß von Kommunikationsendgeräten KE, DV bzw. eines Kommunikationsnetzes an die Kommunikationsanlage PBX auf. Des weiteren beinhaltet die Kommunikationsanlage PBX ein mehrere bidirektionale, Zeitmultiplexorientierte Koppel-Anschlüsse KA1,..., KAn aufweisendes Koppelfeldmodul KN, wobei die Zeitmultiplex-orientierten Koppel-Anschlüsse KA1,...,KAn als PCM-Anschlüsse (Puls Code Modulation) - auch als PCM-Highways, Speech-Highways oder S_{2M}-Anschlüsse bezeichnet - ausgestaltet sind. Über einen Koppel-Anschluß KAn ist das Koppelfeldmodul KN mit einem bidirektionalen, Zeitmultiplex-orientierten Anschluß der LAN-Anschlußeinheit HLB verbunden. Über weitere Koppel-Anschlüsse KA1, KA2 ist das Koppelfeldmodul KN jeweils mit einem bidirektionalen, Zeitmultiplex-orientierten Anschluß der Teilnehmer-Anschlußeinheiten T-AB verbunden.

Des weiteren ist in der Kommunikationsanlage PBX eine mehrere Steueranschlüsse SA aufweisende zentrale Steuereinheit CC angeordnet. Über einen Steueranschluß SAK ist die zentrale Steuereinheit CC mit einem Steuereingang SA des Koppelfeldmoduls KN verbunden. Über einen weiteren Steueranschluß SAB ist die zentrale Steuereinheit CC über einen Steuerbus mit einem auf der LAN-Anschlußeinheit HLB angeordneten Steueranschluß SA und mit Steueranschlüssen SA der Teilnehmer-Anschlußeinheiten T-AB verbunden. Durch die zentrale Steuereinheit CC erfolgt dabei unter anderem eine Steuerung eines Verbindungsaufbaus zwischen zwei Anschlußeinheiten T-AB, HLB über das Koppelfeldmodul KN für eine bidirektionale Datenübermittlung zwischen mit der Kommunikationsanlage PBX verbundenen Kommunikationseinrichtungen KE, DV und eine Steuerung von durch die Kommunikationsanlage PBX für die angeschlossenen internen Kommunikationseinrichtungen KE, DV bereitgestellten Leistungsmerkmalen.

An den Teilnehmer-Anschlußeinheiten T-AB sind über Schnittstellen bereitstellende Teilnehmeranschlußports TAP Kommunikationsendgeräte KE bzw. eine Datenverarbeitungseinrichtung DV an die Kommunikationsanlage PBX angeschlossen. Ein Anschluß von digitalen Kommunikationsendgeräten KE bzw. der Datenverarbeitungseinrichtungen DV an die Kommunikationsanlage PBX erfolgt üblicherweise über S₀-Schnittstellen oder mittels daraus abgeleiteten Schnittstellen, wie beispielsweise Uₚ₀-Schnittstellen. Über Uₚ₀-Schnittstellen an der Kommunikationsanlage PBX angeschlossene Kommunikationsendgeräte KE können zusätzlich mit einer im Kommunikationsendgerät KE integrierten bzw. steckbaren V.24-Schnittstelle V.24 ausgestaltet sein, so daß beispielsweise ein Anschluß einer Datenverarbeitungseinrichtung DV an die Kommunikationsanlage PBX über ein derart ausgestaltetes Kommunikationsendgerät KE erfolgen kann. Alternativ können analoge Kommunikationsendgeräte KE über a/b-Schnitstellen an die Kommunikationsanlage PBX angeschlossen werden.

Über einen LAN-Anschlußport LAP der LAN-Anschlußeinheit HLB ist an die Kommunikationsanlage PBX zusätzlich ein lokales Netzwerk LAN (Local Area Network) angeschlossen. Beispiele für ein lokales Netzwerk LAN sind das 'Ethernet', der 'Token Ring' oder der 'Token Bus'. Im lokalen Rechnernetz LAN sind mehrere Datenverarbeitungseinrichtungen - beispielhaft ist eine Datenverarbeitungseinrichtung DV dargestellt - angeordnet.

In den Datenverarbeitungseinrichtungen DV ist jeweils eine Telefonapplikation T-AP implementiert. Durch eine derartige Telefonapplikation T-AP stehen einem Benutzer der Datenverarbeitungseinrichtung DV alle Funktionsmerkmale - häufig auch als 'Features' bezeichnet - eines herkömmlichen Telefons zur Verfügung. In der Literatur wird eine derartige Telefonapplikation T-AP deshalb häufig auch als virtuelles Telefon bezeichnet. Durch die Telefonapplikation T-AP wird einem Benutzer auf einem Bildschirm der Datenverarbeitungseinrichtung DV eine graphische Bedienoberfläche zur Verfügung gestellt, die für eine Steuerung von Systemfunktionen, insbesondere von durch die Kommunikationsanlage PBX bereitgestellten Leistungsmerkmalen aktivierbare, den jeweiligen Systemfunktionen der Kommunikationsanlage PBX zugeordnete Schaltfläche aufweist. Die Verwendung einer derartige Telefonapplikation T-AP setzt jedoch die Ausgestaltung der Datenverarbeitungseinrichtung DV mit einer sogenannten 'Soundkarte' zum Anschluß geeigneter Sprach-Eingabemittel - z.B. eines Mikrofons - und Sprach-Ausgabemittel - z.B. eines Lautsprechers - an die Datenverarbeitungseinrichtung DV voraus. Verfügt eine Datenverarbeitungseinrichtung DV dagegen über keine angeschlossenen Sprach-Eingabemittel bzw. Sprach-Ausgabemittel, spricht man üblicherweise von sogenannten Wahlhilfeapplikationen, die parallel zu einem Telefon angeschlossen sind und dessen Sprach-Eingabemittel bzw. Sprach-Ausgabemittel nutzen.

In der über den Teilnehmeranschlußport TAP der Teilnehmer-Anschlußeinheit T-AB und in der über die Endgeräteschnittstelle V.24 angeschlossenen Datenverarbeitungseinrichtung DV ist jeweils eine systemspezifische Telefonapplikation T-AP, d.h. eine Applikation die speziell für einen Anschluß an die Kommunikationsanlage PBX ausgestaltet ist, implementiert. Ein bidirektionaler Datenaustausch - insbesondere eine Übermittlung von Steuerinformationen - zwischen den systemspezifischen Telefonapplikation T-AP und der Kommunikationsanlage PBX kann in diesem Fall auf Basis eines kommunikationssystemspezifischen Übertragungsprotokolls KP erfolgen. In der über das lokale Netzwerk LAN mit der Kommunikationsanlage PBX verbundenen Datenverarbeitungseinrichtung DV ist eine systemfremde Telefonapplikation T-AP, d.h. eine Applikation, die nicht speziell für einen Anschluß an die Kommunikationsanlage PBX ausgestaltet ist, implementiert. In diesem Fall ist für den bidirektionale Datenaustausch - insbesondere für die Übermittlung von Steuerinformationen - zwischen der systemfremden Telefonapplikation T-AP und der Kommunikationsanlage PBX eine Umwandlung des kommunikationssystem-spezifischen Übertragungsprotokolls KP auf das von der systemfremden Telefonapplikation T-AP unterstützte Übertragungsprotokoll TAPI (Telefony Application Programming Interface) erforderlich. Die Umwandlung des kommunikationssystem-spezifischen Übertragungsprotokolls KP auf das von der systemfremden Telefonapplikation T-AP unterstützte Übertragungsprotokoll TAPI wird durch eine in der Datenverarbeitungseinrichtung DV implementierten Treibereinheit TE - in der Literatur häufig auch als 'Service Provider' bezeichnet - realisiert.

Für eine Steuerung von Systemfunktionen LM1,LM2,..., insbesondere von Leistungsmerkmalen der Kommunikationsanlage PBX ausgehend von einer Telefonapplikation T-AP weist diese jeweils einer Systemfunktion zugeordnete - nicht dargestellte - aktivierbare Schaltflächen auf. Jeder Schaltfläche ist eine an einem Tastenblock eingebbare systemfunktions-spezifische Zeichenfolge ZF - bestehend aus den Zeichen "*", "#" und den Ziffern 0 - 9 - zugeordnet. Bei einer Betätigung einer Schaltfläche wird die entsprechende systemfunktions-spezifische Zeichenfolge ZF an die Kommunikationsanlage PBX übermittelt, in der die empfangene systemfunktions-spezifische Zeichenfolge ZF durch eine in der Steuereinheit CC angeordnete Wahlbewertungsroutine WBR in eine entsprechende die Systemfunktion in der Kommunikationsanlage PBX auslösende Steuerinformation umgesetzt wird. Hierzu benötigen die systemspezifischen Telefonapplikationen T-AP bzw. die Treibereinheiten TE für die systemfremden Telefonapplikationen T-AP Kenntnis von den, den Systemfunktionen LM1,LM2,... in der Kommunikationsanlage PBX jeweils zugeordneten systemfunktions-spezifischen Zeichenfolgen ZF. Hierfür ist zwischen der Kommunikationsanlage PBX und den Telefonapplikationen T-AP bzw. den Treibereinheiten TE eine Referenzliste RL fest vereinbart, die den gesamten Umfang des Systemfunktionsangebots - insbesondere der von der Kommunikationsanlage PBX für die angeschlossenen internen Kommunikationsendgeräte KE bzw. Datenverarbeitungseinrichtungen DV realisierten Leistungsmerkmale - angibt. Beispielhaft ist die in einer Datenbasis DB der Steuereinheit CC der Kommunikationsanlage PBX gespeicherte Referenzliste RL dargestellt. Hierbei sind Referenzen R auf drei Systemfunktionen LM1,LM2,LM3 mit den zugehörigen systemfunktions-spezifischen Zeichenfolgen *123, *456, *789 dargestellt.

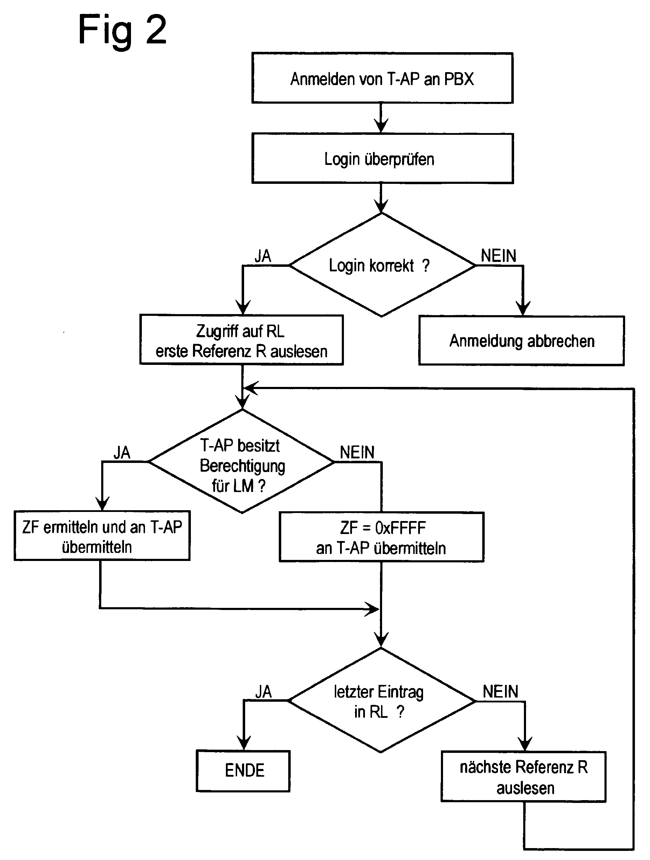

Fig. 2 zeigt ein Ablaufdiagramm zur Veranschaulichung der bei einem Anmelden einer systemspezifischen Telefonapplikation T-AP für die Konfigurierung der Telefonapplikation T-AP ablaufenden wesentlichen Verfahrensschritte. Startet ein Teilnehmer die Telefonapplikation T-AP auf einer Datenverarbeitungseinrichtung DV wird in einem ersten Schritt eine Verbindung zwischen der Datenverarbeitungseinrichtung DV und der Kommunikationsanlage PBX aufgebaut. Die Anmeldung an der Kommunikationsanlage PBX erfolgt dabei beispielsweise auf einfache Weise durch Anwählen eines bestimmten Anschlußports der Kommunikationsanlage PBX.

Im Rahmen der Anmeldeprozedur - in der Literatur häufig als Login bezeichnet - erfolgt aus sicherheitstechnischen Gründen sowohl eine Identifizierungsüberprüfung der Telefonapplikation T-AP als auch zusätzlich eine Authentifizierungsüberprüfung des die Telefonapplikation T-AP nutzenden Teilnehmers. Hierzu wird für die Identifizierung eine der Telefonapplikation T-AP zugeordnete applikationsspezifische Rufnummer an die Kommunikationsanlage PBX übermittelt. Für die Authentifizierung des Teilnehmers wird ein teilnehmerindividuelles Paßwort an die Kommunikationsanlage PBX übermittelt. Zusätzlich kann vorgesehen sein, eine der Telefonapplikation T-AP zugeordnete Lizenznummer an die Kommunikationsanlage PBX zu übermitteln. Die Telefonapplikation T-AP gilt dabei nur dann als angemeldet, wenn noch keine Telefonapplikation T-AP mit derselben Lizenznummer an der Kommunikationsanlage PBX angemeldet ist. Somit kann auf einfache Weise ein mehrfaches Anmelden mit einer unauthorisierten Kopie einer Telefonapplikation T-AP unterbunden werden. Handelt es sich bei der Applikation um eine, einem Anschlußport der Kommunikationsanlage PBX physikalisch eindeutig zugeordnete Applikation - beispielsweise durch eine Verbindung mit einer speziellen Systemschnittstelle der Kommunikationsanlage PBX oder durch einen Anschluß über eine Endgeräteschnittstelle V.24 wobei die Applikation dem Anschlußport des Kommunikationsendgerätes KE zugeordnet ist - kann die Identifikations- und Authentifizierungsprüfung entfallen.

Anhand einer - nicht dargestellten - Datenbasis DB in der den Anschluß der Datenverarbeitungseinrichtung DV an die Kommunikationsanlage PBX realisierenden Anschlußeinheit T-AP, HLB, welche die zur Anmeldung berechtigten Rufnummern, die teilnehmerindividuellen Paßwörter und gegebenenfalls die Lizenznummern enthält, findet eine Überprüfung der Anmeldung der Telefonapplikation T-AP statt. Stimmen die Anmeldedaten nicht überein wird die Anmeldung abgebrochen. Stimmt dagegen das der übermittelten Rufnummer der Telefonapplikation T-AP in der Datenbasis DB als zugeordnet gespeicherte Paßwort und gegebenenfalls die Lizenznummer mit dem übermittelten Paßwort und der gegebenenfalls übermittelten Lizenznummer überein, ist die Anmeldung bestätigt und die Telefonapplikation T-AP wird durch eine Meldung von der den Anschluß der Datenverarbeitungseinrichtung DV an die Kommunikationsanlage PBX realisierenden Anschlußeinheit T-AP, HLB an die zentrale Steuereinheit CC der Kommunikationsanlage in der Datenbasis DB der zentralen Steuereinheit CC der Kommunikationsanlage PBX durch einen Eintrag als angemeldet vermerkt.

Gilt die Telefonapplikation T-AP als angemeldet und/oder sendet die Applikation eine Aktivmeldung, wird im Rahmen eines sogenannten "Downloadverfahrens" auf die in der Datenbasis DB der Steuereinheit CC der Kommunikationsanlage PBX gespeicherte Referenzliste RL zugegriffen und der erste Eintrag, d.h. die erste in der Referenzliste RL vermerkte, eine Systemfunktion LM kennzeichnende Referenz R, ausgelesen. In einem nächsten Schritt wird überprüft, ob der Telefonapplikation T-AP, d.h. dem der Telefonapplikation T-AP zugeordneten Anschlußport der Kommunikationsanlage PBX, eine Berechtigung zur Ausführung dieser Systemfunktion LM zugewiesen ist. Ist dies der Fall, oder wird für diese Systemfunktion LM keine spezielle Berechtigung benötigt, wird die der Systemfunktion LM zugehörige Zeichenfolge ZF aus der Referenzliste RL ausgelesen und zusammen mit der die Systemfunktion LM kennzeichnenden Referenz R an die Telefonapplikation T-AP übermittelt. In der Telefonapplikation T-AP wird die empfangene systemfunktionsspezifische Zeichenfolge ZF entsprechend ihrer Referenz R gespeichert.

Ist der Telefonapplikation T-AP, d.h. dem der Telefonapplikation T-AP zugeordneten Anschlußport der Kommunikationsanlage PBX die erforderliche Berechtigung zur Ausführung dieser Systemfunktion LM nicht zugewiesen, wird eine Übermittlung der der Systemfunktion LM zugehörigen Zeichenfolge ZF durch die Kommunikationsanlage PBX unterbunden oder alternativ eine definierte Zeichenfolge 0xFFFF an die Telefonapplikation T-AP übermittelt, welche von der Telefonapplikation T-AP als ungültig erkannt wird. Die Telefonapplikation T-AP erkennt in diesem Fall selbständig das Ausbleiben der, der gespeicherten Referenz R zugehörigen systemfunktions-spezifischen Zeichenfolge ZF und vermerkt die zugehörige Schaltfläche als nicht aktiv. Dies erfolgt beispielsweise dadurch, daß die dieser Systemfunktion LM zugeordnete Schaltfläche auf der der Telefonapplikation T-AP zugeordneten Bedienoberfläche 'ausgegraut' wird.

Abschließend überprüft die Kommunikationsanlage PBX, ob die aus der Referenzliste RL ausgelesene Referenz R der letzte Eintrag der Referenzliste RL ist. Ist dies der Fall, ist die Konfigurierung der Telefonapplikation T-AP abgeschlossen. Sind dagegen weitere Einträge in der Referenzliste RL vorhanden, wird die nächste Referenz R aus der Referenzliste RL ausgelesen und das Verfahren mit der Überprüfung der Berechtigung für die dieser Referenz R zugeordnete Systemfunktion LM fortgesetzt. Im Rahmen des "Downloadverfahrens" sind zusätzlich Mechanismen enthalten, die einen Meldungsverlust auf Empfängerseite, d.h. durch die Telefonapplikation T-AP, erkennen. Geht eine Meldung verloren, wird sie durch die Telefonapplikation T-AP erneut angefordert.

In Fällen, in denen die anzumeldende Telefonapplikation T-AP eine systemfremde Telefonapplikation T-AP ist, erfolgt die Konfigurierung analog zu dem beschriebenen Verfahren jedoch zwischen der entsprechenden auf der Datenverarbeitungseinrichtung DV implementierten, das von der systemfremden Telefonapplikation T-AP unterstützte Übertragungsprotokoll (TAPI) auf das kommunikationssystem-spezifische Übertragungsprotokoll umsetzende Treibereinheit TE und der Kommunikationsanlage PBX.

Nach einer vollständigen Konfigurieren wird bei einer Betätigung der entsprechenden Schaltfläche bzw. bei einer Ausführung eines automatisch auszuführenden Applikationsleistungsmerkmals durch die Telefonapplikation T-AP mittels eines Zugriffs auf die Referenz R ein Aussenden der zugehörigen systemfunktions-spezifischen Zeichenfolge ZF an die Kommunikationsanlage PBX bewirkt. In der Kommunikationsanlage PBX wird die empfangene systemfunktions-spezifische Zeichenfolge ZF durch die Wahlbewertungsroutine WBR in eine entsprechende, die Systemfunktion LM aktivierende Steuerinformation für die Kommunikationsanlage PBX umgesetzt und eine die Systemfunktionsaktivierung anzeigende Quittungsmeldung an die Telefonapplikation T-AP übermittelt. Die Quittungsmeldung umfaßt dabei die der Systemfunktion LM zugeordnete Referenz R und eine Information über den aktuellen Status der Systemfunktion LM. Durch eine Übermittlung der Referenz R gemäß der Referenzliste RL kann die mitübermittelte Information auf einfache Weise einer Schaltfläche der Telefonapplikation T-AP zugeordnet und die übermittelte Information durch die Telefonapplikation T-AP an der optischen Bedienoberfläche angezeigt werden.

## Patentansprüche

1. Verfahren zum Konfigurieren einer an einem Kommunikationssystem (PBX) anzumeldenden, auf einer Datenverarbeitungseinrichtung (DV) ablaufenden Applikation (T-AP),
wobei die Applikation (T-AP) mehrere, jeweils eine Systemfunktion (LM1, LM2,...) des Kommunikationssystems (PBX) veranlassende Auswahleinheiten aufweist und zwischen der Applikation (T-AP) und dem Kommunikationssystem (PBX) eine Referenzliste (RL) mit den, bei Empfang eines systemfunktionsspezifischen Codewortes (ZF) durch das Kommunikationssystem (PBX) ausführbaren Systemfunktionen (LM1, LM2,...) vereinbart ist,
wobei im Rahmen der Anmeldung der Applikation (T-AP) automatisch die den in der Referenzliste (RL) aufgeführten Systemfunktionen (LM1, LM2,...) zugeordneten systemfunktions-spezifischen Codeworte (ZF) vom Kommunikationssystem (PBX) an die Applikation (T-AP) übermittelt werden, und
wobei die übermittelten systemfunktions-spezifischen Codeworte (ZF) den Auswahleinheiten zugehörig von der Applikation (T-AP) gespeichert werden.

2. Verfahren nach Anspruch 1,
**dadurch gekennzeichnet**,
daß empfangene systemfunktions-spezifischen Codeworte (ZF) zusätzlich Applikationsfunktionen zugeordnet werden, die in Abhängigkeit des Zustands der Applikation (T-AP) automatisch ausgeführt werden.

3. Verfahren nach Anspruch 1 oder 2,
**dadurch gekennzeichnet**,
daß in der Referenzliste (RL) die durch das Kommunikationssystem (PBX) realisierbaren Leistungsmerkmale gespeichert werden.

4. Verfahren nach einem der vorhergehenden Ansprüche,
**dadurch gekennzeichnet**,
daß in Fällen, in denen eine Systemfunktion (LM1, LM2,...) aufgrund einer nicht vorhandenen Berechtigung für die Applikation (T-AP) gesperrt ist, eine Übermittlung des, der Systemfunktion (LM1, LM2,...) zugehörigen Codewortes (ZF) an die Applikation (T-AP) von der Kommunikationsanlage (PBX) automatisch unterbunden wird.

5. Verfahren nach einem der Ansprüche 1 bis 4,
**dadurch gekennzeichnet**,
daß in Fällen, in denen eine Systemfunktion (LM1, LM2,...) aufgrund einer nicht vorhandenen Berechtigung für die Applikation (T-AP) gesperrt ist, ein ungültiges Codewort (0xFFFF) an die Applikation (T-AP) übermittelt wird.

6. Verfahren nach Anspruch 4 oder 5,
**dadurch gekennzeichnet**,
daß in Fällen, in denen das einer Systemfunktion (LM1, LM2, ...) zugehörige Codewort (ZF) nicht übermittelt oder als ungültig ermittelt wird, die zugehörige Auswahleinheit der Applikation (T-AP) als nicht aktiv gekennzeichnet wird.

7. Verfahren nach einem der vorhergehenden Ansprüche,
**dadurch gekennzeichnet**,
daß die Referenzliste (RL) zwischen einer auf der Datenverarbeitungseinrichtung (DV) ablaufenden Teibereinheit (TE) und dem Kommunikationssystem (PBX) vereinbart ist, wobei durch die Treibereinheit eine Umsetzung eines von der Applikation unterstützten Übertragungsprotokolls (TAPI) auf ein kommunikationssystem-individuelles Übertragungsprotokoll (KSP) erfolgt.

8. Verfahren nach einem der vorhergehenden Ansprüche,
**dadurch gekennzeichnet**,
daß durch die Applikation (T-AP) bzw. die Treibereinheit (TE) ein Meldungsverlust von durch das Kommunikationssystem (PBX) übermittelten Meldungen erkannt und eine erneute Übermittlung der verlorengegangenen Meldung durch das Kommunikationssystem (PBX) veranlaßt wird.

9. Verfahren nach einem der vorhergehenden Ansprüche,
**dadurch gekennzeichnet**,
daß die Applikation (T-AP) eine den Funktionsumfang eines herkömmlichen Telefons aufweisende, eine Datenübermittlung über das Kommunikationssystem (PBX) steuernde Telefonapplikation ist.
